# EUROPEAN PATENT APPLICATION

(11) **EP 4 125 021 A1**
(43) Date of publication of application: **01.02.2023**
(21) Application number: 22179512.3
(22) Date of filing: 17.06.2022
(51) Int. Cl.: G06Q 20/24, G06Q 30/06

(54) **DYNAMIC REVISION OF WEBPAGES WITH CUSTOMIZED OPTIONS**

(30) Priority: 28.07.2021 US 202117387581
(71) Applicant: Citiegroup Credit Services, Inc. (USA), Jacksonville, FL 32258 (US)
(72) Inventor: SUREKA, Ashutosh, Jacksonville, 32258 (US); CHANDRASEKHARAN, Kartik, Jacksonville, 32258 (US); ZAFAR, Shadman, Jacksonville, 32258 (US); KASSAM, Shafiq, Jacksonville, 32258 (US)
(74) Representative: Bjerkén Hynell KB

(57) **Abstract**

Described herein are methods and systems to generate and display interactive graphical user interfaces that receive data inputs from users. A server receives, from a webserver, a request to display electronic content comprising at least one interactive graphical element corresponding to a payment option on a webpage hosted by the webserver displayed on a user device, the request comprising a unique identifier associated with a user interacting with the webpage; calculates an attribute of the payment option for the user; transmits for presentation on the webpage, at least one graphical element comprising the payment option, the interactive graphical element configured to receive an input from the user interacting with the webpage; and upon receiving an indication of interactions with the graphical element, transmits a monetary amount to an account of a merchant associated with the webserver.

## Description

### TECHNICAL FIELD

This application relates generally to dynamic interactive graphical user interfaces that are customized for consumers without transmitting personally identifiable information.

### BACKGROUND

Current payment methods do not provide alternative payment options without requiring the end-user to provide a myriad of personal information. For instance, when an end-user requests to complete a transaction (e.g., "checkout" request), the end-user is then provided with an option to complete the transaction using alternative payment options, such as installment plans. If the end-user selects this option, a new page is loaded or additional prompts are presented where the user is required to input various personally identifiable information. It is desirable to revise the online checkout process without requiring personally identifiable information. First, these methods may cause security concerns by transmitting personally identifiable information over the internet or to an online merchant. Second, the new webpages to which the end-users are directed are usually new webpages having a different look and feel that is unfamiliar or not trusted by the end-user. Third, many end-users prefer not to prolong the shopping process by responding to more questions. Facing additional questions-especially requests to provide personally identifiable information or other sensitive data-can result in abandoned carts and dissatisfied end-users.

### SUMMARY

For the aforementioned reasons, there is a desire for an electronic platform that seamlessly displays alternative (installment) payment options for which users qualify. Described herein are methods and systems to dynamically revise an electronic platform (e.g., website) to display customized alternative (installment) payment options without directing users to a new page and without requesting personally identifiable information or other sensitive data. The methods and systems described herein reduce data entry time and decrease the likelihood of cart abandonment.

In an embodiment, a method comprises responsive to an input on a merchant webpage from a user, transmitting, by a webserver hosting the merchant webpage to a first server, a request to display at least one interactive graphical element corresponding to an installment payment option on the webpage and a payment card number inputted by the user, whereby the first server: identifies an existing profile based on the payment card number without receiving personally identifiable information from the webserver, and calculates an attribute of the installment payment option for the user based on the existing profile and without an input of personally identifiable information from the user; receiving, by the webserver from the first server, instructions to insert the at least one interactive graphical element comprising the installment payment option on the webpage having a visual characteristic of the webpage; and dynamically revising, by the webserver, the webpage upon the input, the at least one interactive graphical element configured for selection by the user, whereby responsive to a selected interactive graphical element on the webpage, the server transmits an instruction to execute the installment payment option based on the selected interactive graphical element to a second server.

In another embodiment, a method comprises responsive to an input on a merchant webpage from a user, receiving, by a processor from a webserver hosting a merchant webpage, a request to display at least one interactive graphical element corresponding to an installment payment option on the webpage and a payment card number inputted by the user; identifying, by the processor, an existing profile based on the payment card number without using personally identifiable information; calculating, by the processor, an attribute of the installment payment option for the user based on the existing profile and without an input of personally identifiable information from the user; transmitting, by the processor to the webserver, instructions to insert the at least one interactive graphical element comprising the installment payment option on the webpage having a visual characteristic of the webpage, the instructions thereby causing the webserver to dynamically revise the webpage upon the input, the at least one interactive graphical element configured for selection by the user; and responsive to a selected interactive graphical element on the webpage, transmitting, by the processor, an instruction to execute the installment payment option based on the selected interactive graphical element to a second server.

In yet another embodiment, a method comprises responsive to an input on a merchant webpage from a user, receiving, by a processor from a webserver hosting a merchant webpage, a request to display at least one interactive graphical element corresponding to an installment payment option on the webpage and authentication credential inputted by the user; identifying, by the processor, an existing profile based on the authentication credential without using personally identifiable information; calculating, by the processor, an attribute of the installment payment option for the user based on the existing profile and without an input of personally identifiable information from the user; transmitting, by the processor to the webserver, instructions to insert the at least one interactive graphical element comprising the installment payment option on the webpage having a visual characteristic of the webpage, the instructions thereby causing the webserver to dynamically revise the webpage upon the input, the at least one interactive graphical element configured for selection by the user; and responsive to a selected interactive graphical element on the webpage, transmitting, by the processor, an instruction to execute the installment payment option based on the selected interactive graphical element to a second server.

It is to be understood that both the foregoing general description and the following detailed description are exemplary and explanatory and are intended to provide further explanation of the invention as claimed.

### BRIEF DESCRIPTION OF THE DRAWINGS

The accompanying drawings constitute a part of this specification, illustrate an embodiment of the invention, and, together with the specification, explain the invention.
**FIG. 1** illustrates a computer system for dynamically revising webpage with consumer-customized payment options, in accordance with an embodiment.
**FIG. 2** illustrates a flowchart depicting operational steps for dynamically revising webpage with consumer-customized payment options, in accordance with an embodiment.
**FIGS. 3-4** illustrate various graphical user interfaces and elements displayed by the analytics server, in accordance with different embodiments.
**FIG. 5** illustrates a flowchart depicting operational steps for dynamically revising webpage with consumer-customized payment options, in accordance with an embodiment.

### DETAILED DESCRIPTION

Reference will now be made to the exemplary embodiments illustrated in the drawings, and specific language will be used here to describe the same. It will nevertheless be understood that no limitation of the scope of the invention is thereby intended. Alterations and further modifications of the inventive features illustrated here, and additional applications of the principles of the inventions as illustrated here, which would occur to a person skilled in the relevant art and having possession of this disclosure, are to be considered within the scope of the invention.

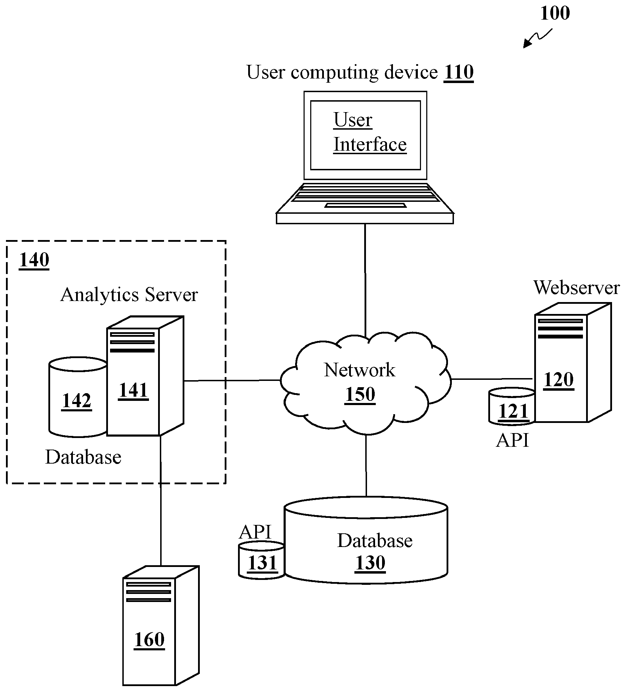

**FIG. 1** illustrates various components of a system **100** for dynamically revising webpages with consumer-customized payment options, in accordance with an embodiment. The system **100** provides a non-limiting example of a computer system having various features that can be utilized to dynamically revise one or more webpages with consumer-customized payment options. The system **100** may be utilized by third party webserver (e.g., webserver **120)** to incorporate graphical elements generated by the analytics server **141.** In some configurations, the graphical elements generated by the analytics server **141** may be incorporated into one or more webpages hosted by the webserver **120.** In other configurations, the graphical elements generated by the analytics server **141** may be directly displayed onto the end users' computing devices (e.g., user-computing device **110).**

The system **100** may include an analytics server **141,** webserver **120,** database **130,** and user-computing device **110.** These features may communicate with each other over a network **150.** The network **150** may include, but is not limited to, private or public local area network, wireless local area network, metropolitan area network, wide-area network, and the Internet. The network **150** may further include both wired and wireless communications according to one or more standards via one or more transport mediums. The communication over the network **150** is in accordance with various communication protocols such as transmission control protocol and internet protocol, user datagram protocol, and Institute of Electrical and Electronics Engineers communication protocols. The network **150** may further include wireless communications according to Bluetooth specification sets, or another standard or proprietary wireless communication protocol. The network **150** may further include communications over a cellular network, including, for example, a global system for mobile communications, code division multiple access, and enhanced data for global evolution network.

The system **100** may operate in a local computing environment where the user-computing device **110** may execute an application to access an electronic platform generated/hosted by the webserver **120.** An example of an electronic platform may be a website accessible through a browser application. For instance, the user-computing device **110** may execute a browser application and access a website hosted by the webserver **120.** Even though some embodiments described herein focus on a website hosted by the webserver, the methods and systems described herein are not limited to websites. For instance, the webserver may also host/generate an application accessible by the user-computing device **110** (e.g., internal application native to an organization where an employee operating the user-computing device **110** may access or a mobile application accessed by the user-computing device **110).** The methods and systems described herein apply to generating various graphical elements that are customized to a user operating the user-computing device **110.** These graphical elements may be embedded into other graphical elements and/or applications, such as embedded within a website or any other application.

The system **100** may operate in a cloud-computing environment where the user-computing device **110** may be cloud-optimized. The user-computing device **110** data may execute the browser application and access graphical user interfaces and elements generated by the analytics server **141.** The graphical user interfaces and elements generated by the analytics server **141** (e.g., services provided by the analytics server **141)** may be stored and executed on a remote cloud-based analytics server **141** accessed over a network cloud. In the cloud-computing environment, a web browser on the user-computing device **110** may interface with an application program associated with the analytics server **141,** which is executed remotely via cloud-based technology.

The analytics server **141** may be any computing device capable of performing the actions described herein. For instance, the analytics server **141** may include a processing unit, and a non-transitory machine-readable storage medium. The processing unit may include a processor with a computer-readable medium, such as a random access memory coupled to the processor. The analytics server **141** may be executing algorithms or computer executable program instructions, which may be executed by a single processor or multiple processors in a distributed configuration. The analytics server **141** may be configured to interact with one or more software modules of a same or a different type operating within the system **100.**

Non-limiting examples of the processor may include a microprocessor, an application specific integrated circuit, and a field programmable object array, among others. The analytics server **141** is capable of executing data processing tasks, data analysis tasks, and valuation tasks. Non-limiting examples of the analytics server **141** may include a desktop computer, a server computer, a laptop computer, a tablet computer, and the like. For ease of explanation, the **FIG. 1** depicts a single server computing device functioning as the analytics server **141.** However, some embodiments may include a plurality of server computing devices capable of performing various tasks described herein.

The analytics server **141** may utilize a database, such as the database **142,** to store and/or retrieve various data described herein. For instance, the analytics server **141** may store different data corresponding to different payment options and payment attributes (e.g., number of installments, annual percentage rates of loans, and other terms and conditions) within the database **142.** The database **142** may also include data associated with the user operating the user-computing device **110.** The database **142** may also include customer information, such as customer's personally identifiable information (e.g., name, age, and other demographic data) and payment information (e.g., card numbers or other unique identifiers associated with customer's payment card and other payment information). The analytics server **141** may also retrieve data (e.g., demographic and/or financial) data associated with the user requesting the electronic form. For instance, the database **142** may include user data (e.g., previously populated by the analytics server **141** and/or periodically retrieved from a third-party data source).

The analytics server **141** and the database **142** may represent a secondary organization's server and database. The secondary organization **140** may be an organization offering dynamic revisions of webpages (e.g., checkout pages) for the webserver **120.** An example of the secondary organization **140** may include a financial institution, such as a bank. In a non-limiting example, the webserver **120** may generate/host a website for a merchant offering products and services. The analytics server **141** may utilize the methods and systems described herein to revise the merchant's webpage and display customized payment information accordingly.

The analytics server **141** may use various application programming interfaces (APIs) to communicate with different features described herein. An API, as used herein, refers to a computing interface that uses connector programming code to act as a software intermediary between at least two computing components/features described herein. The API may automatically and/or periodically transfer various calls, instructions, and/or requests among different features of the system **100.** Using different APIs, the analytics server **141** may automatically transmit and/or receive calls and instruction. For instance, the analytics server **141** may use API **121** to communicate with the webserver **120,** such that when a user operating the user-computing device **110** requests a particular purchase, the API **121** automatically transmits an instruction to the analytics server **141.** The instruction may include data needed for the analytics server **141** to generate and display the graphical elements described herein. The analytics server **141** may also use the API **131** to communicate with the database **130.**

The API **131** and/or **121** may be two-way APIs. A two way API refers to an API that allows information to be transmitted back and forth between at least two features of the system 100. For instance, when a user operating the user computing device **110** requests a purchase via a website hosted by the webserver **120,** the API **121** may generate a call instructing the analytics server **141** to analyze the data and display customer-specific payment information accordingly. The call may include data associated with the user requesting the purchase.

The analytics server **141** may also use the API **121** to transmit a second call to the webserver **120.** The second call may include instructions to display the generated graphical elements (e.g., software code defining the graphical elements and instructing the webserver **120** to embed the graphical elements within one or more webpages). As the webserver **120** displays the graphical elements, the analytics server **141** may use the API **121** to receive user inputs. The analytics server may similarly use a two-way API to communicate with the database **130.**

Additionally or alternatively, the analytics server may use a content delivery network (CDN) to ensure data integrity when communicating with different features described in the system **100.** A CDN, as described herein, refers to a distributed delivery network of proxy servers/nodes that uses multi-layered delivery methods/systems to transmit data (e.g., Akamai). The analytics server **141** may use a CDN when communicating various calls/instructions with the webserver **120** (directly or via the API **121)** and/or the database **130** (directly or via the API **131).**

The webserver **120** may be a computing device hosting a website (or any other electronic platform) accessible to the user-computing device **110** via the network **150.** The webserver **120** may include a processing unit and non-transitory machine-readable storage capable of executing various tasks described herein. The processing unit may include a processor with a computer-readable medium, such as a random access memory coupled to the processor. Non-limiting examples of the processor may include a microprocessor, an application specific integrated circuit, and a field programmable object array, among others. Non-limiting examples of the webserver **120** may include workstation computers, laptop computers, server computers, laptop computers, and the like. While the system **100** includes a single webserver **120,** in some embodiments the webserver **120** may include a number of computing devices operating in a distributed computing environment.

The webserver **120** may be executing algorithms or computer executable program instructions, which may be executed by a single processor or multiple processors in a distributed configuration. The webserver **120** may be configured to interact with one or more software modules of a same or a different type operating within the system **100.** For instance, the webserver **120** may execute software applications configured to host an electronic platform, which may generate and serve various webpages to the user-computing device **110.** The electronic platform may also embed various graphical user interfaces generated by the analytics server **141.**

The webserver **120** may execute software applications configured to display the user interfaces described herein (e.g., host a website that displays graphical user interfaces and other graphical elements generated by the analytics server **141),** which may generate and serve various webpages to user-computing device **110.** The analytics server **141** and/or the webserver **120** may be configured to require user authentication based upon a set of user authorization credentials (e.g., usernames, passwords, biometrics, cryptographic certificates, and the like). In such implementations, the analytics server **141** and/or the webserver **120** may access a system database (e.g., database **130)** configured to store user credentials, which the analytics server **141** and/or the webserver **120** may be configured to reference in order to determine whether a set of entered credentials (purportedly authenticating the user) match an appropriate set of credentials that identify and authenticate the user.

The analytics server **141** and/or the webserver **120** may generate and host webpages onto the user-computing device **110** based upon a user's role within the system **100.** In such implementations, the user's role may be defined by data fields and input fields in user records stored in the database **130.** The analytics server **141** and/or the webserver **120** may authenticate the user and may identify the user's role by executing an access directory protocol (e.g., Lightweight Directory Access Protocol (LDAP)). In addition to authenticating a user, the analytics server **141** and/or the webserver **120** may identify a profile associated with the user and analyze the data, such that the graphical elements are customized for each user.

The webserver **120** may generate and serve webpages to the user-computing device **110** based upon information associated with the user and structure of the interactive graphical elements of the user-computing device **110.** The information associated with the user may be defined by data fields in user records stored in the local memory or database, such as the database **142** and/or database **130.**

The user-computing device **110** is a computing device including a processing unit. The processing unit may execute a valuation software application or a web browser application that accesses or receives data records from the database **130.** The processing unit may include a processor with computer-readable medium, such as a random access memory coupled to the processor. The user-computing device **110** may be running algorithms or computer executable program instructions, which may be executed by a single processor or multiple processors in a distributed configuration. The user-computing device **110** may interact with one or more software modules of a same or a different type operating within the system **100.**

Non-limiting examples of the processor may include a microprocessor, an application specific integrated circuit, and a field programmable object array, among others. Non-limiting examples of the user-computing device **110** may include a server computer, a workstation computer, a tablet device, and a mobile device (e.g., smartphone, PDA). An end user (inputting the data or filling out the electronic form) may operate the user-computing device **110.** The user may be a client of a financial company. For ease of explanation, **FIG. 1** illustrates a single computing device functioning as the user-computing device **110.** However, some embodiments may include a plurality of computing devices capable of performing the tasks described herein.

The database **130** associated with the analytics server **141,** the webserver **120,** the data sources **102,** and the user-computing device **110** is capable of storing information in various formats and/or encrypted versions. The information may include data records associated with various companies utilizing the webserver **120,** data records associated with the webserver **120,** and data records associated with different users (e.g., customer profiles having personally identifiable information, financial information, and any other information necessary to determine a customized financing option for the user). The database **130** may also store data associated with user preferences, attributes associated with various graphical elements to be generated by the analytics server **141,** and the like. The database **130** may have a logical construct of data files, which are stored in non-transitory machine-readable storage media, such as a hard disk or memory, controlled by software modules of a database program (e.g., SQL), and a database management system that executes the code modules (e.g., SQL scripts) for various data queries and management functions. Even though the database **130** is shown as a separate computing feature, the database **130** may be a part of a computing environment that includes the webserver **120.** For instance, the database **130** and the webserver **120** may belong to a merchant computing environment where the webserver **120** retrieves merchant data from the database **130** to host a website.

Utilizing the web browser executing on the user-computing device **110,** a user may generate a request that can be transmitted to the analytics server **141** and/or the webserver **120.** Specifically, the user may request to fill out an electronic form and submit the form using a website generated by the webserver **120.** As a result, the webserver **120** may instruct the analytics server **141** to generate a chat-like intelligent data input form to collect the user's information. The request may also include data associated with the user (e.g., demographic data and/or user preferences) and data associated with the user's request (e.g., purchase price).

The analytics server **141** may then generate various graphical user interfaces and graphical elements that represent customized payment information for the user operating the user-computing device **110.** The analytics server **141** may then generate various interactive graphical user interfaces and elements and may instruct the webserver **120** to incorporate the generated graphical user interfaces and elements within the website displayed on the user-computing device **110.** The analytics server **141** and/or webserver **120** may display the graphical user interfaces an elements generated by the analytics server **141** in a manner that is indistinguishable from the website hosted by the webserver **120.** For instance, the graphical user interfaces and elements generated by the analytics server **141** may be implemented/embedded within the website generated/hosted by the webserver **120,** such that they share the same look and feel. In this way, the user is not directed to a new webpage and the interaction with the customized payment options is seamless.

The analytics server **141** and/or webserver **120** may monitor the user's interactions with the graphical user interfaces and elements generated by the analytics server **141.** For instance, the analytics server **141** and/or the webserver **120** may record data inputted by the user and may transmit the recorded data (e.g., a submitted application) to another server for processing. For instance, the analytics server may determine which payment option was selected by the user and may transmit the selection to another server to facilitate the transaction.

In operation, the analytics server **141** may provide a pluggable software component to be installed and executed by a merchant utilizing the webserver **120** to host a merchant website. Upon installation, a system administrator may configure the pluggable component using various preferences and defined criteria. For instance, the system administrator may customize the pluggable component, such that graphical elements and components have the same look and feel of the merchant's website. Additionally, the system administrator may customize the locations of the elements to be displayed by the pluggable component.

A pluggable component (also known as a plug-in) may be a software component that adds a specific feature to an existing computer program utilized and executed by the webserver **120.** The analytics server **141** may provide services discussed herein via the pluggable component. The analytics server may implement plug-in functionality using shared libraries that get dynamically loaded at run time and installed in a place prescribed by the host application (e.g., stored within the database **142** and/or **130).** The pluggable component may be in direct communication with the analytics server **141,** such that the analytics server **141** can determine whether the user/customer has requested alternative payment options (e.g., installment payment options). The analytics server **141** can also display various graphical elements and components discussed herein using the pluggable component. In this way, the analytics server **141** can instruct the webserver **120** to display different components within the merchant website.

After the initial setup, the webserver **120** can continue hosting the merchant website. When a user reaches a defined page (e.g., a checkout page), the pluggable component may gather user data and transmit a notification to the analytic server **141.** The pluggable component may first request an authorization from the webserver **120** before interacting with the user or displaying any data. For instance, the pluggable component may transmit a token (GetAccessToken command) to the webserver **120** or a merchant server. Using the token, the webserver **120** may authenticate the analytics server **141** and authorize it to display the graphical component discussed herein. Upon a successful authorization, the pluggable component may then transmit a command to the webserver **120** (GetCustomerAccountInfo). In this way, the pluggable component may transmit unique identifier of the user (e.g., user's credit card number) to the analytics server. The analytics server **141** may then use the user's unique identifier to identify a customer profile within the database **142** (or database **130)** and retrieve data associated with the user. Based on the retrieved data, the analytics server **141** (or a third party server) may generate installment payment options for the user and may utilize the pluggable component to display various graphical elements and components representing those options.

After receiving a selection from the user, the analytics server **141** may transmit the selection and other transaction data (e.g., purchase price) to a secondary server **160.** The secondary server **160** may then facilitate the transaction by transmitting a monetary amount (e.g., purchase price) to an account of the merchant. Even though the analytics server **141** and the secondary server **160** are shown as two separate servers, in some embodiments, the functionality attributed to the secondary server **160** may be performed by the analytics server **141.** For instance, the analytics server **141** may display installment payment options, receive a selection, and facilitate the transaction by transmitting the purchase price to a merchant account. The analytics server **141** may then revise a data record within the database **142** and/or **130** recording the user's new debt obligation.

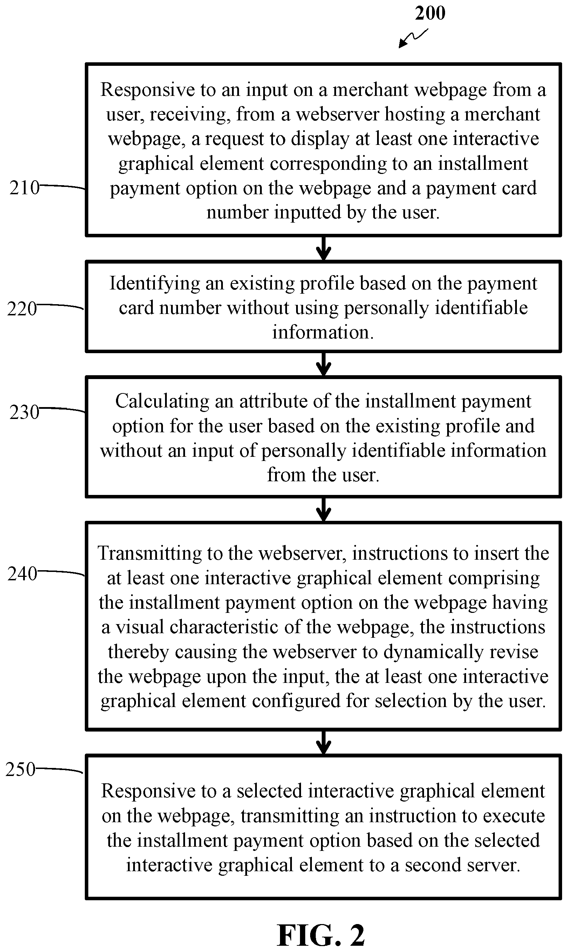

**FIG. 2** illustrates a flowchart depicting operational steps for dynamically revising webpage with consumer-customized payment options, in accordance with an embodiment. The method **200** describes how a server, such as the analytics server described in **FIG. 2****,** displays various customer-specific interactive graphical user interfaces and elements configured to receive users' inputs. Even though the method **200** is described as being executed by the analytics server, the method **200** can be executed by any server and/or locally within a user's computing device or as a browser extension. Additionally or alternatively, the method **200** can be executed by a webserver acting as both a webserver and the analytics server by hosting the website and generating the graphical elements described herein. Furthermore, other configurations of the method **200** may comprise additional or alternative steps, or may omit one or more steps altogether.

At step **210,** the analytics server may receive, from a webserver hosting a merchant webpage responsive to an input on the merchant webpage from a user, a request to display at least one interactive graphical element corresponding to an installment payment option on the webpage and a payment card number inputted by the user. As an example, inputting the payment card number may correspond to selecting a payment card displayed on the merchant webpage. As an example, the merchant webpage may be a checkout page of a merchant associated with the webserver.

The analytics server may receive a request from a webserver to generate one or more graphical elements that are customized for a user operating the user device. The graphical elements may be configured to display payment options associated with a purchase initiated by the user. The transaction may be between the user operating the user device and an entity associated with the webserver (e.g., webserver of a merchant). The request may be generated and transmitted by the webserver hosting a website accessed by a user on their user device. For instance, a user may initiate a web browser application and access a website generated/hosted by webserver. Non-limiting examples of websites may include merchant websites providing goods and services to users on the World Wide Web.

In a non-limiting example, a user may interact with a graphical element displayed within the website hosted by the webserver and indicate a desire to purchase an item or acquire a service. For instance, the user may access a checkout page and indicate a desire to check out by completing a transaction (e.g., submitting payment information to purchase the product or services). In order to complete the transaction, the user may be required to provide payment data. For instance, the user may be required to provide authentication credentials to a payment processing service (e.g., login/password to an e-wallet or a website that facilitates secure payments). In another example, the user may be required to enter payment information, such as credit card number and other identifying information. In yet another embodiment, the user may have previously saved their payment information with the merchant. As a result, the webserver may access the payment data and may pre-populate one or more input elements configured to receive user's payment information. The user may then select a payment option (e.g., credit card) from a list of previously saved payment options.

The checkout page may also include an input element configured to receive an indication that the user desires to view installment payment options. A non-limiting example of an installment payment option may include installment plans or a personal loan underwritten by a third-party, or in some embodiments, by a payment processing entity. For instance, the checkout page may include an input element (e.g., radio button or an interactive hyperlink) prompting the user to interact with the input element if interested in an installment payment option.

Upon the user indicating that they are interested in an installment payment option, the webserver may transmit a notification to the analytics server. The notification may be an electronic message that includes the user's payment data. For instance, if the user has entered their payment data or if the merchant (or any database associated with the merchant or the webserver) has access to previously saved payment information (e.g., user has previously saved their payment information).

The request received by the analytics server may include additional data associated with the user or the user device. For instance, before requesting to submit their application, the user may provide their demographic information. For instance, the user may login to the website provided by the webserver. As a result, the webserver may access the user's demographic data previously inputted by the user and/or retrieved from a third party. When transmitting the request to the analytics server, the webserver may include the user's demographic data and any other data included in the user's profile, such as user preferences or other data enriched by third-party data sources. The webserver may also include previous purchase history and other related data associated with the user within the request.

The webserver may also include data associated with the user's device, such as IP address, location data, MAC address, and the like. The request may also include attributes associated with the product being sold or services rendered within the request. For instance, the webserver may indicate that the user is purchasing a stationary exercise bicycle for $2300.

At step **220,** the analytics server may identify an existing profile based on the payment card number without using personally identifiable information. The analytics server may use the data received from the webserver (step **210)** to retrieve a customer profile associated with the user. The analytics server may not require additional data from the user. For instance, the analytics server may only use the payment card number entered by the user to execute a look up table that queries various customer profiles based on the unique identifier. As discussed herein, the unique identifier received from the webserver may be any information that was entered by the user, such as payment card number entered by the user during the transaction (e.g., or a certain credit card selected by the user that already existed within a merchant profile). In another example, the unique identifier may be the login credential (or authentication credential) provided by the user. For instance, the user may have an existing merchant account and may have previously entered various identifiers (e.g., name, address and payment information). The webserver may transmit any of the identifiers stored within the profile to the analytics server.

Upon receiving the request from the webserver, the analytics server may query and retrieve a customer profile for the user stored within a database. The customer profile may include various information necessary to identify whether the user is eligible for installment payment options. For instance, the customer profile may include data needed to determine financing options and installment plans for the use. Non-limiting examples of data included within the customer profile may include user's credit score, payment history, pending financial obligations (e.g., loans, installment payments), assets, and the like.

At step 230, the analytics server may calculate an attribute of the installment payment option for the user based on the existing profile and without an input of personally identifiable information from the user. Using the data retrieved from the customer profile, in addition to the data received from the webserver, the analytics server may calculate (or instruct another server to calculate) attribute of an installment payment option for the user. For instance, based on the user's credit worthiness, current assets and liabilities, purchase amount, and other user information, the analytics server may calculate loans terms (e.g., number of installments, down payment, and interest) for the user's requested purchase. The analytics server may not request any additional data to be inputted by the user. For instance, the analytics server may only use the data included in the customer profile of the user (step **220).**

In some configurations, the analytics server (or another server) may previously have generated loans terms for the user. As a result, the analytics server may reduce calculation time by accessing the previously generated loan terms offline.

At step **240,** the analytics server may transmit, to the webserver, instructions to insert the at least one interactive graphical element comprising the installment payment option on the webpage having a visual characteristic of the webpage, the instructions thereby causing the webserver to dynamically revise the webpage upon the input, the at least one interactive graphical element configured for selection by the user.

The analytics server may instruct the webserver to display one or more graphical elements within the webpage. The analytics server may display (or instruct the webserver to display) the graphical elements in accordance with predetermined and revisable visual characteristics. These visual characteristics may allow the analytics server to match the visual characteristics of other components within the webpage. For instance, the new interactive graphical element may match the same size, font, color, and other visual characteristics of other components displayed by the webserver.

The analytics server may retrieve the visual characteristics corresponding to the user preferences, merchant preferences, or of the webpage being rendered (e.g., font, text size, shape, and/or color). For instance, the webserver, user, or a system administrator may identify default visual attributes for the graphical elements and the analytics server may display various payment options and input elements having those attributes. In this way, the graphical elements generated by the analytics server maintain the look and feel of the webpage (e.g., checkout page) hosted by the webserver.

The graphical elements may be adjusted in size based on the amount of content or other criteria. Visual characteristics associated with the graphical elements may be consistent with the data retrieved from the database. For instance, the webserver may previously identify visual elements associated with the graphical user interfaces generated by the analytics server. Non-limiting examples of visual elements may include font type, font size, spacing, type of input element (e.g., radio button, text string input, and/or drop-down menu), and the like. Additionally or alternatively, a system administrator and/or the user may revise these visual elements. For instance, a user may select bigger fonts or a type of input field (e.g., some users prefer to input their responses using interactive buttons and some users prefer to type their responses).

The analytics server may instruct the webserver to embed code configured to display the graphical elements within the website generated/hosted by the webserver. In a non-limiting example, the analytics server may access software scripts (e.g., HTML code) associated with the website and may reconfigure the scripts, such that the newly generated graphical elements are embedded within the website.

The graphical elements may also include input elements configured to receive an input or a selection from the user. For instance, as described above, the graphical elements may correspond to different payment options where each graphical element displays one payment option. Therefore, each graphical element may also be an interactive button allowing the user to select the best-suited option.

At step **250,** the analytics server may, responsive to a selected interactive graphical element on the webpage, transmitting, by the processor, an instruction to execute the installment payment option based on the selected interactive graphical element to a second server.

Upon displaying the graphical element, the analytics server may monitor the user's interactions with the input fields (or the graphical elements themselves). When the user interacts with one or more input elements the analytics server may transmit a notification to a second server indicating the selection made by the user. The notification may also include information about the graphical element selected by the user. For instance, the notification may include data associated with the payment or installment plan selected by the user (e.g., APR, number of installments, and the like).

The notification may also include various instructions (e.g., executable files and script) that instruct the second server to execute the selected installment plan option. The second server may add the balance (e.g., purchase price) to the user's credit card account in accordance with the selected installment option. For instance, the second server may generate a script that can automatically add each installment balance to the user's credit card account each month.

The second server may be a server configured to facilitate the installment payment option, for example, by extending credit to the user. For instance, the second server may transmit to the merchant (or an account associated with the merchant) the funds needed to complete the transaction. In this way, the second server settles the transaction for the user using the user's selected installment payment option. In some configurations, the analytics server may act as both the analytics server and the second server. Therefore, instead of transmitting the notification to the second server, the analytics server may itself settle the transaction.

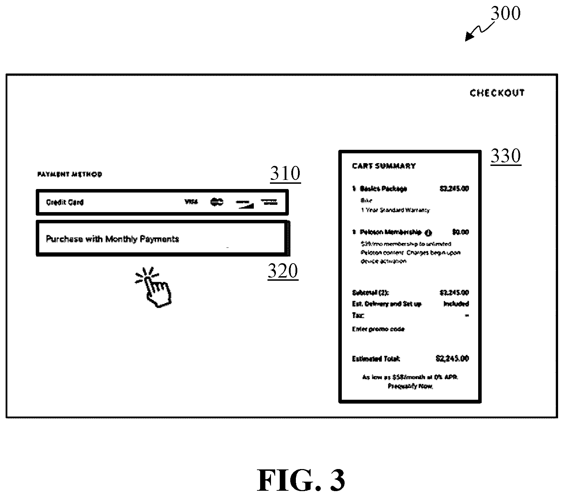

Referring now to **FIGS. 3-4****,** non-limiting examples of the graphical user interfaces and elements described herein are illustrated. Even though **FIGS. 3-4** illustrate a progression in sequential graphical user interfaces, in some configurations the analytics server may display the depicted graphical user interfaces in another order. Moreover, the analytics server may not display one or more of the graphical elements described herein. The analytics server may display various combinations and configurations of the graphical user interfaces depicted herein.

The graphical user interfaces depicted in **FIGS. 3-4** illustrate one or more graphical elements displayed by the analytics server through a webserver, as described in **FIG. 1****.** For instance, a user may log into a merchant website and request various services where a webserver associated with the website (e.g., the host for the website) may communicate the information to the analytics server. The analytics server may in turn display the graphical elements depicted herein using the "look and feel" of the third-party website. Therefore, the user may not be required to leave for a third-party website and/or initiate a new webpage generated by the analytics server. In some configurations, however, the user may be directed to a new website where the analytics server displays the graphical user interfaces and elements discussed herein. For instance, the analytics server may require additional information from the user. As a result, the analytics server (or the webserver) may direct the user to a new webpage, such that the user is presented additional prompts to input additional data (e.g., social security data or other payment information).

As depicted in **FIG. 3****,** an end-user may initiate a web browser on an electronic device, such as their mobile device and direct the web browser to a website configured to purchase a product. After selecting the product, the webserver directs the user to the checkout page **300.**

The checkout page **300** may include the graphical element **310** presenting the user options to pay with a credit card (and different types of credit cards). The checkout page **300** may also include an interactive graphical element **320** that provides the user the option to pay for the transaction via an installment payment option (e.g., purchase the product via monthly installments). The checkout page **300** may also include the graphical component **330** that display various information associated with the transition, such as product information and price points.

The webserver may identify the analytics server when the webserver determines that the user has interacted with the interactive graphical component **320.** For instance, the webserver may utilize one or more APIs to transmit a notification to the analytics server. Additionally or alternatively, the webserver may execute a pluggable component (e.g., software script) that is communication with the analytics server. The pluggable component may transmit the notification directly to the analytics server.

The notification may include information associated with the transaction, such as the item to be purchased, price, vendor, delivery date, and other transaction data needed to identify an installment payment option. The notification may include a unique identifier associated with the user. For instance, the user may have previously stored their payment information (e.g., credit card information) via an account (e.g., an account with the merchant or the webserver). The user may log in and access the account to expedite the checkout process whereby the webserver retrieves the user's payment information to facilitate the transaction (e.g., prefill the input elements requesting the user's payment information). In those embodiments, the notification may include the user's payment information.

Additionally or alternatively, the notification may include a unique identifier associated with the user. For instance, the notification may include a name, account number, or other personally identifiable information associated with the user (e.g., social security number).

Using the information within the notifications, the analytics server may identify a customer profile associated with the user. For instance, the analytics server may query and retrieve a customer profile using the credit card information associated with the user (or other personally identifiable information included within the notification). The analytics server may determine that the user is an existing customer (e.g., has an active account with a financial institution associated with the analytics server). The analytics server may retrieve various personal and financial data included with in the customer profile.

Using the transaction data and the user data retrieved from the customer profile, the analytics server (or another server under direction of the analytics server) may calculate various installment payment options for the user. For instance, based on the credit worthiness of the user and the purchase price, the analytics server may generate three alternative installment plans for the user and the pending transaction.

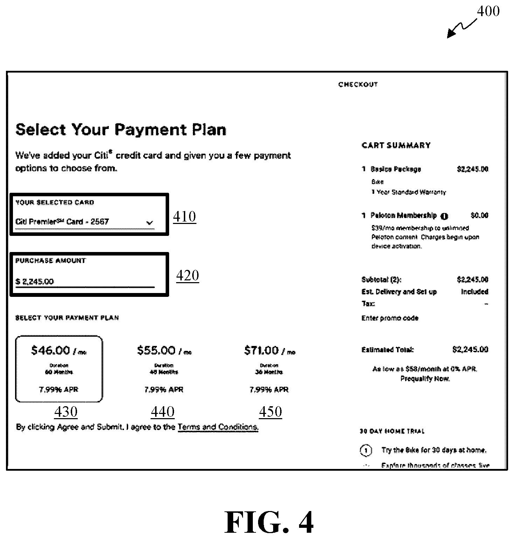

The analytics server may instruct the webserver (via one or more API or the pluggable component) to direct the user to the alternative payment page **400,** as depicted in **FIG. 4****.** The alternative payment page may include the graphical component **410** that displays a payment option selected by the user. The card information may be inputted directly by the user and/or may have been previously saved within a user profile. In some embodiments, the card information depicted in the graphical component **410** may have been used by the analytics server to retrieve data needed to calculate installment payment options. The installment payment option page **400** may also include the graphical component **420** that display the purchase amount.

The installment payment option page **400** may also include three alternative payments calculated by the analytics server to facilitate the pending transaction. Each installment payment option may include different attributes. For instance, the graphical component **430,** may indicate a first installment payment option that comprises installments of $46/month for 60 months. The first installment payment option also includes a 7.99% APR. The graphical component **440** may indicate a second installment payment option that comprises installments of $55/month for 48 months. The second installment payment option also includes a 7.99% APR. The graphical component **450** may indicate a second installment payment option that comprises installments of $71/month for 36 months. The second installment payment option also includes a 7.99% APR.

Each graphical component **430-450** may be an interactive components configured to receive a selection by the user interacting with the installment payment option page **400.** For instance, the user may select one of the payment options described above by clicking (or otherwise interacting with) the corresponding graphical component. Upon receiving an indication that the user has interacted with a graphical component, the webserver may transmit a notification to the analytics server informing the analytics server that a selection has been made and indicating which graphical component has been interacted with by the user.

The analytics server may then facilitate the transaction by transmitting the installment payment option selected by the user. For instance, the analytics server may transmit the attributes of the selected installment payment option to a second server where the second server can facilitate the transaction by transmitting the requested funds ($2,245.00) to an account associated with the merchant. The second server may also generate a new account associated with the newly created financial obligation associated with the user. For instance, if the user selects the first installment payment option, the second server may revise one or more data records within one or more databases indicating that the user is now responsible for monthly payments of $46 at a 7.99% APR for 60 months. In some embodiments, the analytics server may act as the analytics server and the second server. Therefore, all or at least part of the actions described herein as being performed by the second server may be performed by the analytics server itself.

In some configurations, the notification received via the webserver may not include enough data for the analytics server to identify or retrieve a customer profile associated with the user. Moreover, in some embodiments, the user may not have an account (or a customer profile) accessible to the analytics server. For instance, the user may not login to their account and may attempt to complete the transaction "as a guest" (e.g., without providing any data additional to their payment data). In another example, the user may not have a customer profile (or an account) stored within the databases accessible to the analytics server (e.g., the user does not have a credit card associated with the bank using the analytics server to provide installment payment options). In those embodiments, the analytics server may instruct the webserver (using APIs) or may directly display (using pluggable components) one or more input elements configured to receive user information. For instance, the analytics server may display an input element (e.g., text box or a radio button) requesting the user's personally identifiable information (e.g., full legal name, address, and social security number). The analytics server may then calculate one or more installment payment options based on the information inputted by the user (and purchase price received from the webserver).

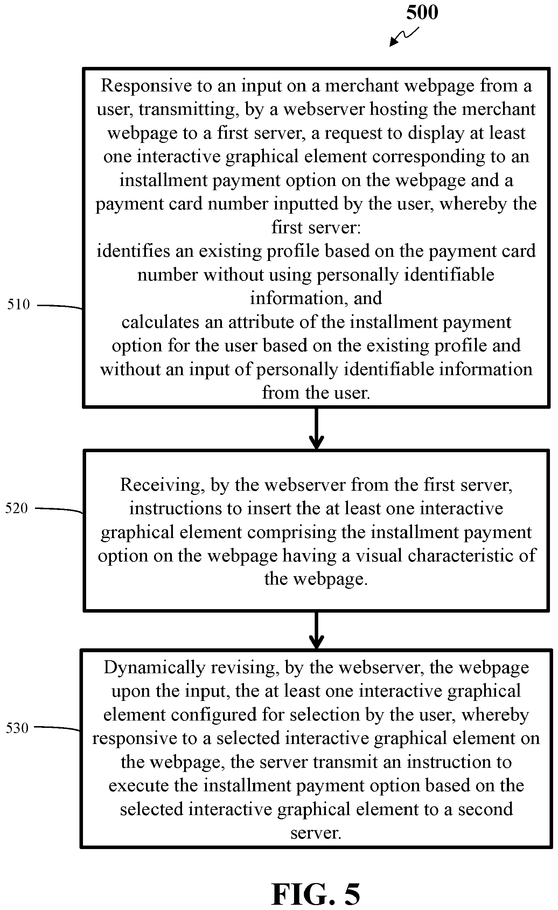

**FIG. 5** illustrates a flowchart depicting operational steps for dynamically revising webpage with consumer-customized payment options, in accordance with an embodiment. The method **500** describes how a server, such as the analytics server described in **FIG. 5****,** displays various customer-specific interactive graphical user interfaces and elements configured to receive users' inputs. Even though the method **500** is described as being executed by the webserver, the method **500** can be executed by any server and/or locally within a user's computing device or as a browser extension. Additionally or alternatively, the method **500** can be executed by a webserver acting as both a webserver and the analytics server by hosting the website and generating the graphical elements described herein. Furthermore, other configurations of the method **500** may comprise additional or alternative steps, or may omit one or more steps altogether.

At step **510,** the webserver hosting the merchant webpage may, responsive to an input on a merchant webpage from a user, transmit to a first server, a request to display at least one interactive graphical element corresponding to an installment payment option on the webpage and a payment card number inputted by the user, whereby the first server: identifies an existing profile based on the payment card number without using personally identifiable information, and calculates an attribute of the installment payment option for the user based on the existing profile and without an input of personally identifiable information from the user. As an example, the merchant webpage may be a checkout page of a merchant associated with the webserver.

The webserver may host a webpage for a merchant, such as depicted in FIGS. 3-4. When the user clicks on the installment option, the webserver may transmit a request to the analytics server. The request may also include a unique identifier associated with the user, such as the payment card number inputted by the user (e.g., credit card selected by the user or the credit card number directly inputted by the user within an input element) and/or login credentials from the user (e.g., login credentials inputted by the user to a customer profile associated with the merchant and/or the analytics server). As an example, inputting the payment card number may correspond to selecting a payment card displayed on the merchant webpage. As discussed herein, the analytics server may use the information within the request to identify a customer profile and calculate installment options for the user.

At step **520,** the webserver may receive, from the first server, instructions to insert the at least one interactive graphical element comprising the installment payment option on the webpage having a visual characteristic of the webpage. The webserver may then receive an electronic message from the analytics server that includes an instruction to display one or more interactive graphical elements that display attributes of the calculated installment plan.

At step **530,** the webserver may dynamically revise the webpage upon the input, the at least one interactive graphical element configured for selection by the user, whereby responsive to a selected interactive graphical element on the webpage, the server transmits an instruction to execute the installment payment option based on the selected interactive graphical element to a second server. Upon receiving the instruction, the webserver may dynamically revise the webpage by loading and rendering the interactive graphical elements received from the analytics server. When the user selects an option (by interacting with the rendered interactive graphical element), the webserver transmits an indication of the selection to the analytics server. The analytics server may then transmit an instruction to a second server to execute the installment payment option selected by the user, as discussed herein.

The foregoing method descriptions and the process flow diagrams are provided merely as illustrative examples and are not intended to require or imply that the steps of the various embodiments must be performed in the order presented. The steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations can be performed in parallel or concurrently. In addition, the order of the operations may be re-arranged. A process may correspond to a method, function, procedure, subroutine, subprogram, or the like. When a process corresponds to a function, the process termination may correspond to a return of the function to a calling function or a main function.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code, it being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module, which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that is accessible by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. "Disk" and "disc", as used herein, include compact disc (CD), laser disc, optical disc, digital versatile disc (DVD), floppy disk, and Blu-ray disc formats, wherein "disks" reproduce data magnetically, while "discs" reproduce data optically with lasers. Combinations of the above should also be included within the scope of computer-readable media. Additionally, the operations of a method or algorithm may reside as one or any combination or set of codes and/or instructions on a non-transitory, processor-readable medium and/or computer-readable medium, which may be incorporated into a computer program.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope and spirit being indicated by the following claims.

## Claims

1. A method comprising:
responsive to an input on a merchant webpage from a user, transmitting, by a webserver hosting the merchant webpage to a first server, a request to display at least one interactive graphical element corresponding to an installment payment option on the merchant webpage and a payment card number inputted by the user, whereby the first server:
identifies an existing profile based on the payment card number without receiving personally identifiable information from the webserver, and
calculates an attribute of the installment payment option for the user based on the existing profile and without an input of personally identifiable information from the user;
receiving, by the webserver from the first server, instructions to insert the at least one interactive graphical element comprising the installment payment option on the merchant webpage, the at least one interactive graphical element having a visual characteristic of the merchant webpage; and
dynamically revising, by the webserver, the merchant webpage upon the input, the at least one interactive graphical element configured for selection by the user, whereby responsive to a selected interactive graphical element on the merchant webpage, the first server transmits an instruction to execute the installment payment option based on the selected interactive graphical element to a second server.

2. The method of claim 1, wherein the first server uses a pluggable component to communicate with the webserver, and/or wherein the first server uses an application programming interface to communicate with the webserver.

3. The method of claim 1, wherein the attribute of the installment payment option corresponds to at least one of a monthly amount, a number of installments, or an interest rate.

4. The method of claim 1, wherein the first server, at least partially, calculates the attribute of the installment payment option using the data associated with the user.

5. The method of claim 1, wherein inputting the payment card number corresponds to selecting a payment card displayed on the merchant webpage.

6. The method of claim 1, wherein the merchant webpage is a checkout page of a merchant associated with the webserver.

7. A method comprising:
responsive to an input on a merchant webpage from a user, receiving, by a processor from a webserver hosting the merchant webpage, a request to display at least one interactive graphical element corresponding to an installment payment option on the merchant webpage and a payment card number inputted by the user;
identifying, by the processor, an existing profile based on the payment card number without using personally identifiable information;
calculating, by the processor, an attribute of the installment payment option for the user based on the existing profile and without an input of personally identifiable information from the user;
transmitting, by the processor to the webserver, instructions to insert the at least one interactive graphical element comprising the installment payment option on the merchant webpage having a visual characteristic of the merchant webpage, the instructions thereby causing the webserver to dynamically revise the merchant webpage upon the input, the at least one interactive graphical element configured for selection by the user; and
responsive to a selected interactive graphical element on the merchant webpage, transmitting, by the processor, an instruction to execute the installment payment option based on the selected interactive graphical element to a second server.

8. The method of claim 7, wherein the processor uses a pluggable component to communicate with the webserver, and/or wherein the processor uses an application programming interface to communicate with the webserver.

9. The method of claim 7, wherein the attribute of the installment payment option corresponds to at least one of a monthly amount, a number of installments, or an interest rate.

10. The method of claim 7, wherein the processor, at least partially, calculates the attribute of the installment payment option using the data associated with the user.

11. The method of claim 7, further comprising:
transmitting, by the second server, a monetary amount to an account of a merchant associated with the webserver.

12. A method comprising:
responsive to an input on a merchant webpage from a user, receiving, by a processor from a webserver hosting the merchant webpage, a request to display at least one interactive graphical element corresponding to an installment payment option on the merchant webpage and authentication credential inputted by the user;
identifying, by the processor, an existing profile based on the authentication credential without using personally identifiable information;
calculating, by the processor, an attribute of the installment payment option for the user based on the existing profile and without an input of personally identifiable information from the user;
transmitting, by the processor to the webserver, instructions to insert the at least one interactive graphical element comprising the installment payment option on the merchant webpage having a visual characteristic of the merchant webpage, the instructions thereby causing the webserver to dynamically revise the merchant webpage upon the input, the at least one interactive graphical element configured for selection by the user; and
responsive to a selected interactive graphical element on the merchant webpage, transmitting, by the processor, an instruction to execute the installment payment option based on the selected interactive graphical element to a second server.

13. The method of claim 12, wherein the processor uses a pluggable component to communicate with the webserver, and/or wherein the processor uses an application programming interface to communicate with the webserver.

14. The method of claim 12, wherein the attribute of the installment payment option corresponds to at least one of a monthly amount, a number of installments, or an interest rate.

15. The method of claim 12, wherein the processor, at least partially, calculates the attribute of the installment payment option using the data associated with the user.
